# EUROPEAN PATENT APPLICATION

(11) **EP 3 597 043 A1**
(43) Date of publication of application: **22.01.2020**
(21) Application number: 19186670.6
(22) Date of filing: 17.07.2019
(51) Int. Cl.: A21B 1/40, A23L 3/005, A23L 5/10, A23L 13/00, F24C 7/08

(54) **METHOD FOR HEAT TREATMENT OF FOOD AND A DEVICE FOR CARRYING OUT SAID METHOD**

(30) Priority: 19.07.2018 SI 201800159
(71) Applicant: GORENJE gospodinjski aparati, d.d., 3503 Velenje (SI)
(72) Inventor: BOLCINA, Andrej, 3270 Lasko (SI); ZERDONER, Klavdija, 3320 Velenje (SI); KOKOLJ, Uros, 3320 Velenje (SI)
(74) Representative: Ivancic, Bojan

(57) **Abstract**

The present invention relates to a method for heat treatment of food, in particular of meat, and to a device for carrying said method. Said method comprises steps of turning-on an oven and setting an end temperature Tₖ of heat treatment, warming up the oven by periodic activation of at least one heater of the oven which is activated in time-length tₚₛ of period duration tₚ defining timing of switching on of said at least one heater, and heating of food, after expiration of time-length t₁ when a first temperature Tₚ is reached in the oven, at a temperature Tₖ which equals to or is higher from said temperature Tₚ.

## Description

The present invention relates to a method for heat treatment of food, in particular of meat, and to a device for carrying said method.

Generally, there are two approaches with regard to heat treatment of food, in particular of meat. The first approach provides for in the first phase of the cooking the first temperature to be reached as quickly as possible in order for the meat pores to get closed thus, preventing escape and evaporation of fluids, and subsequent cooking at the second temperature being lower than said first temperature.

The second approach of heat treatment of food, in particular of meat, actually deny said first approach and states that the surface brown crust and the layer of hardened proteins of the heat treated food are not water impermeable, therefore they can not prevent meat juices and water to escape and, respectively, evaporate. Therefore, cooking at relatively low temperatures is proposed.

Food, in particular meat, during heating up losses its mass due to evaporation of water, and fat and meat juice leaking. Said lost of mass is influenced, among other things, by end temperature of the meat centre and the cooking temperature. Generally, after heating up to the same temperature of the food centre the mass loss is bigger if higher cooking temperature is used. Most of the known cooking methods suggest fast heating an oven chamber to the desired temperature and maintaining such a condition during the entire cooking time. Alternate methods suggest a starting phase by heating an oven chamber to the desired temperature and continuing cooking at the second temperature lower than desired temperature, provided by the oven manufacturer.

In a document EP 2 519 773 B1 there is disclosed an oven comprising a cooking chamber wherein the cooking process is performed, a heater that provides foodstuffs placed into the cooking chamber to be cooked, a thermostatic that controls the operation of the heater and a control unit that provides the cooking process to be performed in at least three phases. The first phase comprises cooking at a first temperature defined by the user at the start of cooking process for a first phase duration, the second phase comprises cooking at a second temperature lower than the temperature defined by the user for a second phase duration, and the third phase comprises cooking at a third temperature higher than the temperatures in the first or second phase for a third phase duration. The control unit determines the decision for passing to the second phase from the first phase and/or to the third phase from the second phase according to the difference between the consecutive on-off cycle times of the heater. Said control unit provides passing to the second phase from the first phase and/or to the third phase from the second phase when the difference between the consecutive on-off cycle times of the heater becomes at least as much as a critical time predetermined by the producer.

Furthermore, in a document EP 1 461 568 B1 there is disclosed a control procedure for an oven according to which during an initial warming-up period of the oven full power is supplied, whereupon energy is supplied by full power pulses at a repetition rate of 0,8 to 1,5 pulses per minute and with a duty cycle in the range 20 - 28 %.

It is the object of the present invention to create a method for heat treatment of food, in particular of meat, which remedies drawbacks of the know solutions.

Additional object of the invention is to create a device for carrying out a method for heat treatment of food, in particular of meat.

According to the present invention, the object as set above is solved by features set forth in the characterising part of claim 1. Detail of the invention is disclosed in respective subclaims.

The invention is further described in detail by way of non-limiting embodiment, and with a reference to the accompanying drawings, where
- Fig. 1: shows a diagram of time-dependent temperature,
- Fig. 2: shows a device for carrying out a method according to the invention, and
- Fig. 3: shows an alternate embodiment of the device for carrying out the method.

A method according to the invention provides for that food in the starting phase is slowly heated up in order to prevent evaporation and leaking of meat juice. When treating food by heat such as by cooking characteristic reaction are to be considered, that is caramelisation and Maillard reaction, which contribute to the quality of the cooked food, in particular to the taste. The characteristic temperature where said occurrence is intensive amounts from 140 to 165 °C. According to the present method, said temperature is reached at the end of the cooking. The present method can be carried out in an oven, on a cooking hob or similar.

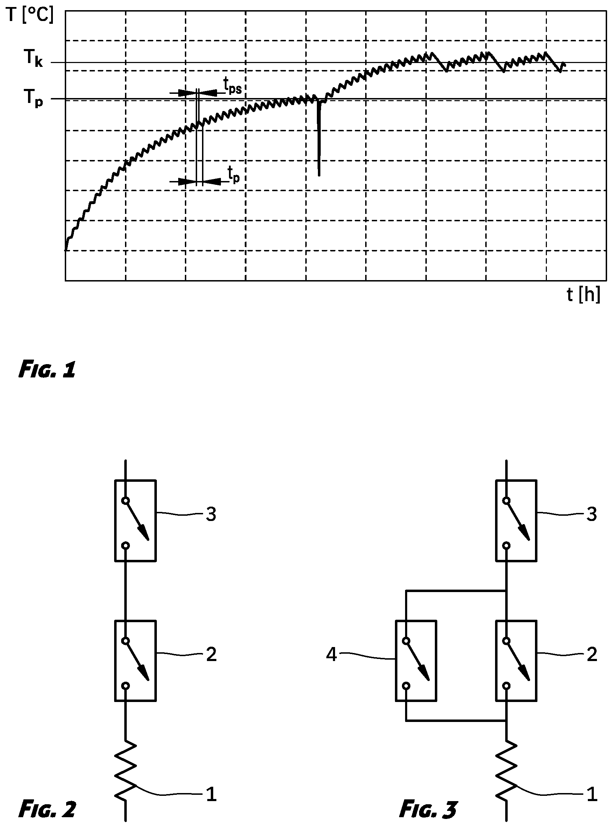

The method of heat treatment in the oven, which comprises an oven chamber with at least one heater such as at least one upper and/or at least one lower heater and similar, starts by switching on the oven and setting an end temperature Tk of heat treatment. The food in the oven begins to warm up by a periodic activation of said at least one heater (Fig. 1) which is activated in a time-length tₚₛ of a period duration tₚ determining the timing of switching on of the heater(s). Here, the time-length tₚₛ represents an operating time of at least one heater during one period, whereas the time-length tₚ represents the total of both the operating time and non-operating time of at least one heater during the one period. The ratio of the time-length tₚₛ to time-length tₚ represents a working cycle of at least one heater and lies between 0,15 in 0,45. Said period tₚ typically lies in the range from 20 to 180 seconds, preferably in the range of 90 seconds.

Fig. 2 shows schematically an oven and, respectively, a control unit thereof for carrying out the method according to the invention, which governs switching on and, respectively, switching off said at least one heater. Energy supply of each heater 1, that is the time-length tₚₛ operating at least one heater and, respectively, said time-length tₚ of the period, is controlled by means of a first switch 2 such as a bimetallic switch. From the moment on, when temperature Tₚ in the oven reaches said set temperature Tₖ of the heat treatment, the temperature control is governed by the oven thermostatic which by means of a second switch 3, that is the thermostatic switch, in a manner known per se controls switching on and, respectively, switching off each heater 1. After expiration of a certain time of heat treatment and, respectively, according to his own judgement the user terminates the method of heat treatment by switching off the heater(s) 1. Said switches 2, 3 being connected to circuit in series.

An alternative embodiment of the method according to the invention provides that the heat treatment of the food in the first phase starts in a manner described above. After expiration of time t₁ when the first temperature Tₚ is reached in the oven (Fig. 1), the method of heat treatment passes on to the second phase where heating up of the food continues at the second temperature Tk which is higher that the first temperature Tₚ and which is set by the user at the time of turning on the oven. Said first temperature Tₚ is optionally pre-determined by the oven manufacturer. Alternatively, the time t₁ of the heat treatment can be pre-determined by the oven manufacturer.

Fig. 3 shows schematically an oven and, respectively, a control unit thereof to carry out another embodiment of the method, which governs switching on and, respectively, switching off said at least one heater. Energy supply of each heater 1, that is the time-length tₚₛ operating at least one heater and, respectively, said time-length tₚ of the period, is controlled by means of the switch 2 such as a bimetallic switch. In addition, actual temperature Td of the oven is measured by means of a temperature sensor located in the oven. When said temperature sensor detects that the temperature in the oven reached the temperature value of T_{d1}, the operation of said at least one heater is switched by means of an additional switch 4 in a manner that the operating time-length tₚₛ of at least one heater is defined by a regulating loop. Said additional switch 4 is connected in parallel with the bimetallic switch 2. Said regulating loop operates in a manner that enables the actual temperature T_{d} in the oven to get near the end temperature Tk of the heat treatment. Deviation of the mean value of the actual temperature Td of the oven with respect to said set temperature Tk of the heat treatment preferably lies in the range of 5 °C. After expiration of a certain time of heat treatment and, respectively, according to his own judgement the user terminates the method of heat treatment by switching off the heater(s) 1.

An embodiment of the control unit of Fig. 4 is also possible, wherein said temperature sensor is located outside the oven and measures temperature of the immediate surrounding thereof.

The method according to the invention provides higher functionality of an apparatus and lower loss of fluids from food, particularly meat to be heat treated. It has been proven by tests a mass loss for about 6 %, lower energy consumption for about 10 % and better uniformity of the heat treatment and, respectively, cooking. However, the time of heat treatment of food increased for about 20%.

Even further embodiment provides that said switch 2 such as the bimetallic switch and said thermostatic switch 3 of the oven are coupled according to the invention in a manner that both switches 2; 3 simultaneously influence the temperature in the oven and the quantity of the supplied energy. According to one of possible alternatives, said coupling is formed of the bimetallic switch 2 and the thermostatic switch 3.

Said bimetallic switch 2 comprises two poles, wherein a first pole represents a bimetallic strip, whereas a second pole is movable by means of a mechanism. Changing the distance between the poles affects the periodical turn-on and turn-off the switch 2.

Said thermostatic switch 3 comprises mutually connected sensor and regulator. Said sensor is connected in a simple mechanical embodiment to the regulator by means of a capillary line, wherein the operation of such unit is formed on the basis of fluid expansion in the sensor and transfer of said expansion via the capillary line to the regulator. Depending on said expansion said regulator maintains turn-on and turn-off the thermostatic switch 3.

Said coupling of the bimetallic switch 2 and the thermostatic switch 3 can be implemented in a mechanical manner, for example, wherein both the bimetallic switch 2 and the thermostatic switch 3 pivotally linked on the same axis of the control button of the oven operated by the user. Coaxial joint of the bimetallic switch 2 and the thermostatic switch 3 enables simultaneous settings of the oven temperature and the quantity of the energy supplied.

The solution according to the present invention can be used with all types of electrical ovens as well as with all types of electrical hobs.

The above description of embodiments is based on known structural parts which can be used to control the power of the heater(s) and regulate the temperature in the oven. However, an embodiment is also possible where the entire process is carried out by means of electronic components the functions and the operating thereof, in accordance with the above described method is governed by the respective software.

## Claims

1. A method for heat treatment of food, in particular of meat, in a n oven, on a cooking hob, and similar, ***characterized in that*** comprises the following steps:
a) turning-on an oven and setting an end temperature Tk of heat treatment;
b) warming up the oven by periodic activation of at least one heater of the oven which is activated in time-length tₚₛ of period duration tₚ defining timing of switching on of said at least one heater;
c) heating of food, after expiration of time-length t₁ when a first temperature Tₚ is reached in the oven, at a temperature Tk which equals to or is higher from said temperature Tₚ.

2. A method according to claim 1, ***characterized in that*** said at least one heater operates periodically with a period tₚ, wherein said at least one heater is active during the time-length tₚₛ of one period tₚ.

3. A method according to claims 1 and 2, ***characterized in that*** said first temperature Tₚ and/or the time-length t₁ of the heat treatment in defined in advance by the oven manufacturer.

4. A method according to any of the preceding claims, ***characterized in that*** the ratio of the time-length tₚₛ of the operation of at least one heater to the time-length tₚ of said one period represent a working cycle lying in the range of between 0,15 and 0,45.

5. A method according to *any of the preceding* claims, ***characterized in that** Said* period tₚ typically lies in the range from 20 to 180 seconds, preferably in the range of 90 seconds.

6. A device for carrying out the method according to claims 1 to 5, ***characterized in that*** it comprises a compartment for heat treatment of food such as an oven, a cooking hod and similar, at least one heater (1), at least one temperature sensor and a control unit, which comprises a first switch (2) connected in series to a second switch (3) and, optionally, an additional switch (4) connected in parallel with the first switch (2).

7. A device according to claim 6, ***characterized in that*** the first switch (2) is selected as a bimetallic switch and the second switch (3) is selected as a thermostatic switch of the oven.

8. A device according to claims 6 and 7, ***characterized in that*** said first switch (2) and said second switch (3) are coupled in a manner to simultaneously affect the temperature in the oven and the quantity of the energy supplied.

9. A device according to any of claims 6 to 8, ***characterized in that*** said coupling of the first switch (2) and the second switch (3) is formed in a mechanical manner, wherein both the first switch (2) and the second switch (3) are pivotally connected on the same axis of a control button of the oven operated by the user.

10. A device according to any of claims 6 to 9, ***characterized in that*** the method according to claims 1 to 5 is carried out by means of electronic components the functions and the operating thereof is governed by the respective software.
